# EUROPÄISCHE PATENTSCHRIFT

(11) **EP 2 881 170 B1**
(45) Veröffentlichungstag und Bekanntmachung des Hinweises auf die Patenterteilung: **29.11.2017**
(21) Anmeldenummer: 14196792.7
(22) Anmeldetag: 08.12.2014
(51) Int. Cl.: B01J 19/32, F28F 25/08

(54) **Einbauelement für eine Vorrichtung zur Behandlung eines Fluids**
Installation element for a device for treating a fluid
Élément d'installation pour un dispositif de traitement d'un fluide

(30) Priorität: 06.12.2013 DE 102013225145
(43) Veröffentlichungstag der Anmeldung: 10.06.2015
(73) Patentinhaber: Hewitech GmbH & Co. KG, 48607 Ochtrup (DE)
(72) Erfinder: Dirkskötter, Frank, 48607 Ochtrup (DE)
(74) Vertreter: dompatent von Kreisler Selting Werner - Partnerschaft von Patent- und Rechtsanwälten mbB

(56) Entgegenhaltungen:
- DE-A1- 19 733 480
- DE-A1-102005 051 882
- DE-A1-102006 005 112
- DE-A1-102009 052 045

## Beschreibung

Die Erfindung betrifft eine Vorrichtung zur Behandlung eines Fluids mit einem Arbeitsfluid, wobei die Vorrichtung vorzugsweise der Befeuchtung, Reinigung und oder Kühlung des zu behandelnden Fluids durch das Arbeitsfluid dient.

Vorrichtungen zur Behandlung von Gasen, insbesondere zur Befeuchtung, Reinigung und/oder Kühlung von Gasen wie bspw. Luft sind grundsätzlich bekannt. Derartige Vorrichtungen können bspw. als Verdunstungsbefeuchter oder Stoffaustauscher dienen, die unter anderem zur Luftbefeuchtigung und gleichzeitigen Luftkühlung bspw. in Wohn- oder Bürogebäuden, Lagerhallen, Stallungen, Gewächshäusern und anderen Räumen oder auch von technischen Anlagen, bspw. für die Reinigung und insbesondere Entstaubung von Zu- oder Abluft für reaktive Gas- oder Luftreinigungen (insbesondere Entfernung von Geruchsstoffen wie bspw. Ammoniak aus der Stallabluft) eingesetzt werden. Die Abkühlung eines Gases mit Hilfe derartiger Vorrichtungen erfolgt nach dem Prinzip der adiabatischen Kühlung (Verdunstungskühlung). Behandlungsvorrichtungen dienen aber insbesondere auch als Wärmetauscher bspw. zum Einbau in bzw. an Kühltürmen und sind in der Ausgestaltung von Rieselkühlern grundsätzlich bekannt.

Die bekannten Behandlungsvorrichtungen der vorstehend genannten Arten weisen Einbaueinrichtungen in Form von Einbaupaketen auf, die jeweils eine Vielzahl von Mattenelementen aufweisen, welche zumeist gewellt sind, so dass bei dichter Anlage benachbarter Mattenelemente sich kreuzende oder seitlich versetzte Kanäle entstehen, durch die über eine Eingangsseite der Vorrichtung das Gas einströmt, die Vorrichtung durchströmt und an einer gegenüberliegenden Ausgangsseite wieder herausströmt. Die Eingangs- und Ausgangsseiten der Vorrichtung werden durch gegenüberliegende Ränder einzelner nebeneinanderliegender Mattenelemente der eingangs- bzw. ausgangsseitig der Vorrichtung angeordneten Einbaupakete gebildet. Somit strömt also das zu behandelnde Fluid parallel zur Erstreckung der Mattenelemente zwischen deren betreffenden Ränder und zwischen den Mattenelementen hindurch. Grundsätzlich ist es aber auch möglich, dass das zu behandelnde Fluid quer zur Erstreckung der Mattenelemente strömt.

Die Einbaupakete der vorstehend genannten Typen von Behandlungsvorrichtungen werden mit Flüssigkeit, dem sogenannten Arbeitsfluid, bei dem es sich insbesondere um Wasser handelt, benetzt, so dass das zu behandelnde Fluid an benetzten Flächen der Mattenelemente entlang strömt. Dabei ist es wünschenswert, dass die Benetzungsflüssigkeit eine möglichst große Oberfläche bildet und sich über einen längeren Zeitraum in der Vorrichtung bzw. den Einbaupaketen hält.

Im Regelfall sind die Mattenelemente rechteckförmig, wobei mehrere benachbarte Mattenelemente ein blockförmiges (quaderförmiges) Einbaupaket bilden. Es ist aber auch möglich, dass die Einbaupakete andere geometrische Formen aufweisen. So könnte man beispielsweise durch den Einsatz unterschiedlich großer, jeweils rechteckiger Mattenelemente ein Einbaupaket erhalten, das zylindrisch ist. Längs eines Durchmessers des Querschnitts des Zylinders sind dann die breitesten Mattenelemente angeordnet, wobei die jeweils benachbarten Mattenelemente in ihrer Breite abnehmen.

Die bekannten Behandlungsvorrichtungen können nach dem Gegenstrom oder nach dem Kreuzstromprinzip arbeiten. Beim Gegenstromprinzip strömen das zu behandelnde Fluid und das zur Behandlung dieses Fluids eingesetzte Arbeitsfluid (bspw. Kühlmedium) entgegengesetzt zueinander. Bei Behandlungsvorrichtungen, die nach dem Kreuzstromprinzip arbeiten, kreuzen sich die Strömungsrichtungen des zu behandelnden Fluids und für des Arbeitsfluids, und zwar im Regelfall unter einem im Wesentlichen rechten Winkel.

Für die Vorrichtungen der vorstehend genannten Arten hat sich seit vielen Jahren bereits ein Einbauelement bewährt, dass aus einzelnen schräg gewellten Gittermatten zusammengesetzt ist, wobei benachbarte Gittermatten gegeneinander verdreht sind, so dass sich die Schrägwellungen kreuzen. Beispiele für derartige Gittermatten sind in DE-A-197 33 480 und DE-U-20 2009 004 513 beschrieben.

Aufgabe der Erfindung ist es, die Effizienz der Einbauelemente für Vorrichtungen zur Behandlung eines Fluids weiter zu verbessern.

Zur Lösung dieser Aufgabe wird der Erfindung ein Einbauelement für eine Vorrichtung zur Behandlung eines Fluids, insbesondere eines Gases, insbesondere zur Befeuchtung, Reinigung und/oder Kühlung mittels eines Arbeitsfluids vorgeschlagen, wobei das Einbauelement versehen ist mit
- mindestens einer gewellten Gittermatte, die versehen ist mit
   - geradlinig verlaufenden, wechselweise nebeneinander angeordneten Vertiefungen und Erhebungen mit diese verbindenden Flanken,
   - zwei im Wesentlichen zueinander parallelen Längsrändern sowie zwei zu diesen querverlaufenden Querrändern,
   - zueinander im Wesentlichen parallelen, geradlinigen ersten Gitterstreben, die jeweils in spitzen und stumpfen Winkeln, d.h. in Winkeln von ungleich 90°, zu sowohl den Längsrändern als auch den Querrändern verlaufen und sich längs der Vertiefungen unten und längs der Erhebungen oben erstrecken,
   - wellenartigen zweiten Gitterstreben, die im Wesentlichen parallel zu den Längsrändern verlaufen und an längs von gedachten im Wesentlichen geraden Knotenpunktlinien angeordneten Knotenpunkten mit den ersten Gitterstreben verbunden sind und
   - untereinander im Wesentlichen parallelen, wellenartigen dritten sowie ebenfalls untereinander im Wesentlichen parallelen, wellenartigen vierten Gitterstreben, die an den Knotenpunkten mit den ersten und mit den zweiten Gitterstreben verbunden sind, wobei die dritten und vierten Gitterstreben miteinander zusätzlich an Kreuzungspunkten (34) verbunden sind, welche an den zwischen den Vertiefungen und Erhebungen liegenden Flanken angeordnet sind.

Bei diesem Einbauelement ist erfindungsgemäß vorgesehen,
- dass jede erste Gitterstrebe längs ihrer Erstreckung zwischen den Längsrändern oder zwischen einem Längsrand und einem Querrand mindestens einen Unterbrechungsabschnitt aufweist und
- dass die Unterbrechungsabschnitte benachbarter erster Gitterstreben seitlich versetzt und insbesondere überlappungsfrei angeordnet sind.

Erfindungsgemäß sind also die ersten Gitterstreben, die längs der Vertiefungen und längs der Erhebungen verlaufen, unterbrochen und zwar zumindest einmal pro erster Gitterstrebe. An diesen Gitterstreben läuft in eingebautem Zustand des Einbauelements das Arbeitsfluid entlang, das eine möglichst große Oberfläche bilden und eine möglichst große Verweildauer haben sollte. Die Vergrößerung der Oberfläche kann bspw. dadurch erzielt werden, dass längs der ersten Gitterstreben verlaufende Arbeitsfluidtropfen abreißen, womit sie auf in vertikaler Richtung folgende Gitterstreben auftreffen, dort "zerspringen" und damit eine Oberflächenvergrößerung herbeiführen. Dies wird erfindungsgemäß unterstützt durch die unterbrochenen ersten Gitterstreben.

Bei einer vorteilhaften Ausgestaltung der Erfindung ist bspw. vorgesehen, dass sich ein Unterbrechungsabschnitt einer ersten Gitterstrebe zwischen zwei längs der Gitterstrebe benachbarten Knotenpunkten erstreckt. Die Länge eines Unterbrechungsabschnitts ist grundsätzlich beliebig wählbar, es hat sich aber als vorteilhaft erwiesen, denjenigen Abschnitt einer ersten Gitterstrebe zu unterbrechen, der sich zwischen zwei benachbarten Knotenpunkten verbindet. Dieser Unterbrechungsabschnitt kann sich von Knotenpunkt zu Knotenpunkt oder aber auch über eine kürzere Strecke zwischen den beiden Knotenpunkten erstrecken.

Ferner ist es zweckmäßig, wenn die Unterbrechungsabschnitte benachbarter erster Gitterstreben um den Abstand zwischen mindestens zwei längs einer ersten Gitterstrebe aufeinanderfolgenden benachbarten Knotenpunkten seitlich versetzt sind. Aus Stabilitätsgründen ist es von Vorteil, wenn die Unterbrechungsabschnitte der Gitterstreben nicht längs eines zu einem Randabschnitt der Gittermatte parallel verlaufenden Bereichs angeordnet sind, sondern seitlich versetzt sind. Insoweit dient diese Ausgestaltung der Erfindung einer erhöhten Festigkeit und Stabilität des aus den Gittermatten zusammengesetzten Einbauelements.

Die bereits oben angesprochenen Knotenpunkte, d.h. die Verbindungspunkte zwischen den zweiten und den ersten Gitterstreben, sind insbesondere entlang von Knotenpunktlinien angeordnet, die ihrerseits wiederum parallel zu den Längsrändern (oder alternativ zu den Querrändern) verlaufen.

Aus Stabilitätsgründen kann es ferner von Vorteil sein, wenn die Unterbrechungsabschnitte nicht direkt benachbart zu den Längs- bzw. Querrändern angeordnet sind. Insoweit von Vorteil ist es also, wenn die Unterbrechungsabschnitte der ersten Gitterstreben außerhalb von solchen Längserstreckungsbereichen dieser ersten Gitterstreben angeordnet sind, die sich zwischen einem Längsrand oder einem Querrand und dem dazu längs der ersten Gitterstrebe jeweils nächstbenachbarten Knotenpunkt befinden.

In weiterer Ausgestaltung der Erfindung kann es zweckmäßig sein, dass entlang der Längsränder sowie an denjenigen Knotenpunkten, die längs mindestens zweier zwischen den Längsrändern angeordneten und parallel zu diesen verlaufenden Knotenpunktlinien angeordnet sind, korrespondierende Zapfen- und Loch-Verbindungselemente zur mechanischen Verbindung benachbarter Gittermatten ausgebildet sind. Anstelle von Zapfen-Loch-Verbindungselementen zur mechanischen Verbindung benachbarter Gittermatten können diese auch miteinander verschweißt oder auf andere Art und Weise mechanisch verbunden sein. Schließlich ist auch möglich, die Aufeinanderfolge benachbarter Gittermatten des Einbauelements durch Zug- bzw. Druckstäbe, die sich quer durch die Gittermatten erstrecken, mit größerer Zuverlässigkeit zusammenzuhalten.

Durch den seitlichen Versatz der Unterbrechungsabschnitte benachbarter erster Gitterstreben ergibt sich mit Vorteil, dass die Unterbrechungsabschnitte der benachbarter Gittermatten des Einbauelements durch Zug- bzw. Druckstäbe, die sich quer durch die Gittermatten erstrecken, mit größerer Zuverlässigkeit zusammenzuhalten.

Durch den seitlichen Versatz der Unterbrechungsabschnitte benachbarter erster Gitterstreben ergibt sich mit Vorteil, dass die Unterbrechungsabschnitte der ersten Gitterstreben entlang von Streifenbereichen angeordnet sind, die in einem spitzen Winkel zu den Längs- und Querrändern verlaufen.

Wie bereits oben erwähnt, weist jede erste Gitterstrebe grundsätzlich einen einzigen Unterbrechungsabschnitt auf. Es hat sich als zweckmäßig herausgestellt, wenn jede erste Gitterstrebe mehrere Unterbrechungsabschnitte bspw. zwei oder drei Unterbrechungsabschnitte, aufweist. Hier muss ein vernünftiger Kompromiss zwischen dem Vorteil des Abreißens eines Arbeitsfluidtropfens für die Oberflächenvergrößerung des Arbeitsfluids einerseits und der Stabilität des Einbauelements andererseits gefunden werden.

Schließlich ist es auch möglich, pro Gittermatte erste Gitterstreben vorzusehen, die unterschiedlich viele Unterbrechungsabschnitte aufweisen. So kann beispielsweise mit Vorteil vorgesehen sein, dass jede erste Gitterstrebe einen, zwei oder drei Unterbrechungsabschnitte aufweist, wobei benachbarte erste Gitterstreben eine gleiche oder eine ungleiche Anzahl von Unterbrechungsabschnitten aufweisen, und/oder das erste Gitterstreben mit einem Unterbrechungsabschnitt sowie erste Gitterstreben mit zwei Unterbrechungsabschnitten, und/oder erste Gitterstreben mit einem Unterbrechungsabschnitt sowie erste Gitterstreben mit drei Unterbrechungsabschnitten, und/oder erste Gitterstreben mit zwei Unterbrechungsabschnitten sowie erste Gitterstreben mit drei Unterbrechungsabschnitten, und/oder erste Gitterstreben mit einem Unterbrechungsabschnitt, erste Gitterstreben mit zwei Unterbrechungsabschnitten sowie erste Gitterstreben mit drei Unterbrechungsabschnitten existieren.

Die Erfindung wird nachfolgend mehrerer Ausführungsbeispiele sowie unter Bezugnahme auf die Zeichnung näher beschrieben. Im Einzelnen zeigen dabei:
- Fig. 1: eine schematische Darstellung eines Einbauelements, das aus einer Vielzahl von schräg gewellten Gittermatten mit sich wechselweise kreuzenden Wellungen zusammengesetzt ist, wobei das Einbauelement in seiner Einbausituation dargestellt ist, in der die Gittermatten hochkant angeordnet sind.
- Fig. 2: eine Draufsicht auf Ausschnitte einer Gittermatte mit unterbrochenen Gitterstreben gemäß einem ersten Ausführungsbeispiel und
- Fig. 3: eine Draufsicht auf Ausschnitte einer Gittermatte mit unterbrochenen Gitterstreben gemäß einem zweiten Ausführungsbeispiel.

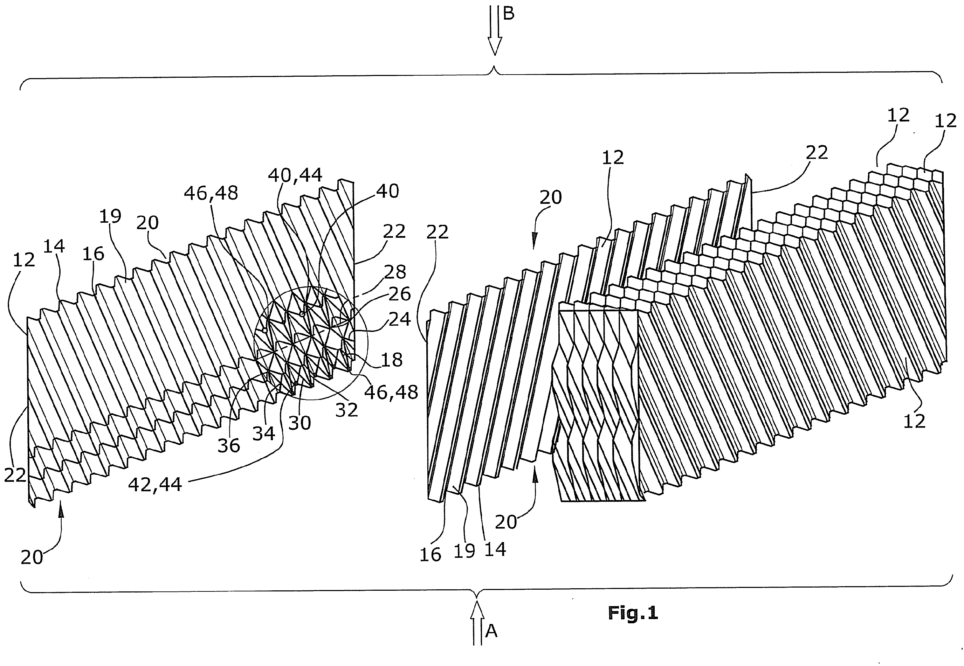

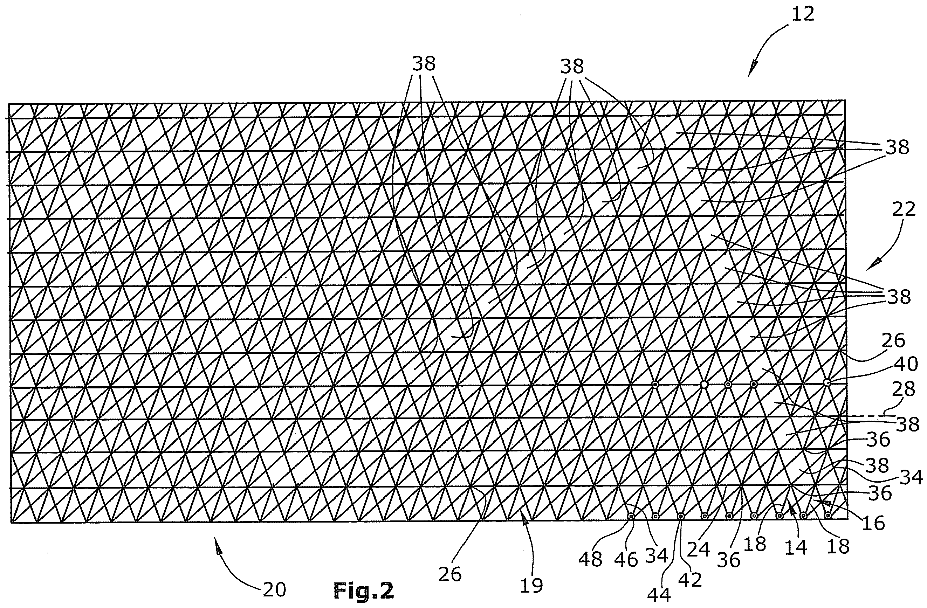

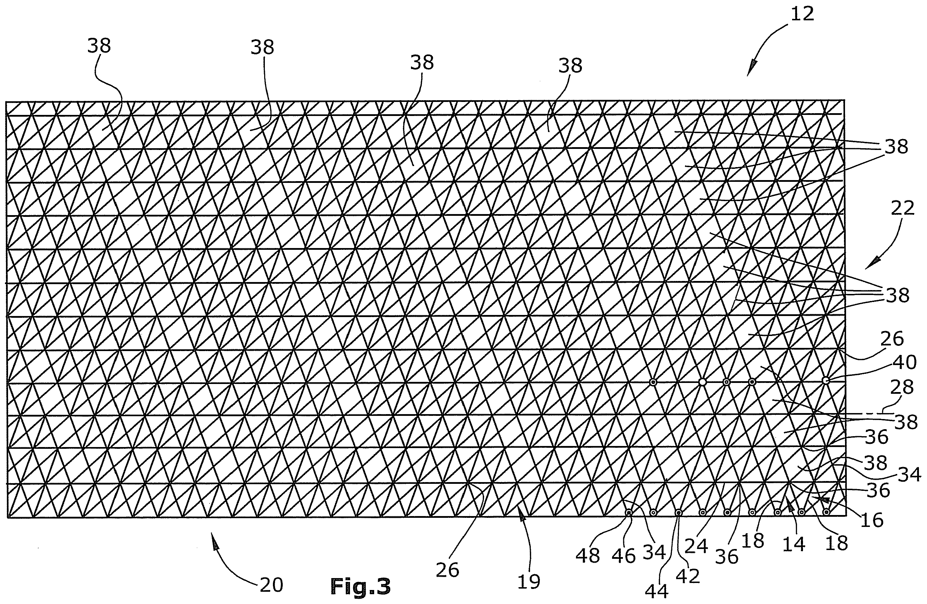

In Fig. 1 ist schematisch und in Explosionsdarstellung ein Einbauelement 10 in Form eines Blocks aus mehreren schräg gewellten Gittermatten 12 gezeigt, wobei jede Gittermatte so, wie beispielhaft in den Fign. 2 bzw. 3 in Draufsicht gezeigt, ausgestaltet ist. Jede Gittermatte 12 weist eine schräg verlaufende Wellung aus Erhebungen 14 bzw. Wellenbergen und Vertiefungen 16 bzw. Wellentälern auf, längs derer sich erste Gitterstreben 18 erstrecken. Benachbarte Erhebungen 14 und Vertiefungen 16 sind dabei durch Flanken 19 miteinander verbunden, wobei das Einbauelement 10 z.B. gemäß dem Gegenstromprinzip eingesetzt wird, indem das zu behandelnde Fluid in Richtung des Pfeils A (z.B. von unten nach oben) durch das Einbauelement 10 und das Arbeitsfluid in Gegenrichtung (siehe Pfeil B und demzufolge in diesem Fall von oben nach unten) strömt. Die Gittermatte 12 weist ferner zwei im Wesentlichen parallele, gewellte Längsränder 20 sowie zwei dazu im Wesentlichen quer verlaufende, ebenfalls gewellte und parallele Querränder 22 auf. Die ersten Gitterstreben 18 erstrecken sich im Wesentlichen zwischen den beiden Längsrändern 20 und zum Teil, nämlich in den Eckenbereichen, zwischen einem Längsrand 20 und einem Querrand 22.

Neben den ersten Gitterstreben 18 weisen die Gittermatten 12 auch zweite Gitterstreben 24 auf, die im Wesentlichen parallel zu den Längsrändern verlaufen. Die zweiten Gitterstreben 24 sind wellenförmig, da sie in einem spitzen Winkel zu den Erstreckungen der Erhebungen 14 und der Vertiefungen 16 verlaufen. Die zweiten Gitterstreben 24 sind an Knotenpunkten 26 mit den ersten Gitterstreben 18 verbunden, wobei diese Knotenpunkte 26 längs einer gedachten Knotenpunktlinie 28 angeordnet sind.

Schließlich weist die Gittermatte 12 dritte Gitterstreben 30 sowie vierte Gitterstreben 32 auf, die sich kreuzen. Die dritten Gitterstreben 30 sind dabei relativ zueinander parallel; ebenso verlaufen die vierten Gitterstreben 32 untereinander parallel. Ihre Kreuzungspunkte 34, 36 sind wechselweise an den Flanken 19 sowie in den Vertiefungen 16 und den Erhebungen 14 angeordnet. Die Kreuzungspunkte 36, längs der Erhebungen 14 und der Vertiefungen 16 fallen mit den Knotenpunkten 26 zwischen den ersten und zweiten Gitterstreben 18, 24 zusammen.

In den Fig. 2 und 3 ist nun gezeigt, wie und wo die ersten Gitterstreben 18 unterbrochen sein können. Gemäß Fig. 2 weisen die ersten Gitterstreben 18 Unterbrechungsabschnitte 38 auf, die jeweils zwischen zwei benachbarten Kreuzungspunkten 36 auf den betreffenden Gitterstreben 18 angeordnet sind.

Dabei sind die Gitterstreben 18 in ihren Bereichen zwischen einem Längsrand 20 und der dazu nächstbenachbarten Knotenpunktlinie 28 (zweite Gitterstrebe 24) mit Vorteil sämtlich nicht unterbrochen. Die relative Anordnung der Unterbrechungsabschnitte 38 ist letztendlich beliebig, wobei darauf geachtet werden sollte, dass derartige Unterbrechungsabschnitte 38 für benachbarte erste Gitterstreben 18 nicht zwischen denselben benachbarten Knotenpunktlinien 28 angeordnet werden.

In den Fign. 2 und 3 sind noch "Augen" oder ringförmige Öffnungen 40 zu erkennen, die bezogen auf das Einbauelement, fluchtend angeordnet sind und durch die ein Zug- bzw. Druckstab sich hindurch erstreckt, der das Einbauelement zusätzlich zusammenhält. Ferner sind an den Längsrändern 20 sowie in der Mitte einer Gittermatte 12 Anlageplättchen 42 mit Öffnungen 44 sowie korrespondierende Anlageplättchen 46 mit Zapfen 48 ausgebildet, die der ZapfenLoch-Verbindung benachbarter Gittermatten 12 dienen. Alternativ könnte man benachbarte Gittermatten auch miteinander verschweißen oder verkleben (ggf. zusätzlich).

## Patentansprüche

1. Einbauelement für eine Vorrichtung zur Behandlung eines Fluids, insbesondere eines Gases, insbesondere zur Befeuchtung, Reinigung und/oder Kühlung mittels eines Arbeitsfluids, mit
- mindestens einer gewellten Gittermatte (12), die versehen ist mit
- geradlinig verlaufenden, wechselweise nebeneinander angeordneten Vertiefungen (16) und Erhebungen (14) mit diese verbindenden Flanken (19),
- zwei im Wesentlichen zueinander parallelen Längsrändern (20) sowie zwei zu diesen querverlaufenden Querrändern (22),
- zueinander im Wesentlichen parallelen, geradlinigen ersten Gitterstreben (18), die in Winkeln von ungleich 90° zu sowohl den Längsrändern (20) als auch den Querrändern (22) verlaufen und sich längs der Vertiefungen (16) unten und längs der Erhebungen (14) oben erstrecken,
- wellenartigen zweiten Gitterstreben (24), die im Wesentlichen parallel zu den Längsrändern (20) verlaufen und an längs von gedachten im Wesentlichen geraden Knotenpunktlinien (28) angeordneten Knotenpunkten (26) mit den ersten Gitterstreben (18) verbunden sind und
- untereinander im Wesentlichen parallelen, wellenartigen dritten sowie ebenfalls untereinander im Wesentlichen parallelen, wellenartigen vierten Gitterstreben (30, 32), die an den Knotenpunkten (26) mit den ersten und mit den zweiten Gitterstreben (18, 24) verbunden sind, wobei die dritten und vierten Gitterstreben (30, 32) miteinander zusätzlich an Kreuzungspunkten (34) verbunden sind, welche an den zwischen den Vertiefungen (16) und Erhebungen (14) liegenden Flanken (19) angeordnet sind,
**dadurch gekennzeichnet,**
- **dass** jede erste Gitterstrebe (18) längs ihrer Erstreckung zwischen den Längsrändern (20) oder zwischen einem Längsrand (20) und einem Querrand (22) mindestens einen Unterbrechungsabschnitt (38) aufweist und
- **dass** die Unterbrechungsabschnitte (38) benachbarter erster Gitterstreben (18) seitlich versetzt und insbesondere überlappungsfrei angeordnet sind.

2. Einbauelement nach Anspruch 1, **dadurch gekennzeichnet, dass** sich ein Unterbrechungsabschnitt (38) einer ersten Gitterstrebe (18) zwischen zwei längs der Gitterstrebe benachbarten Knotenpunkten (26) erstreckt.

3. Einbauelement nach Anspruch 1 oder 2, **dadurch gekennzeichnet, dass** die Unterbrechungsabschnitte (38) benachbarter erster Gitterstreben (18) um den Abstand zwischen mindestens zwei längs einer ersten Gitterstrebe (18) aufeinanderfolgenden benachbarten Knotenpunkte (26) seitlich versetzt sind.

4. Einbauelement nach einem der Ansprüche 1 bis 3, **dadurch gekennzeichnet, dass** die Knotenpunkte (26) entlang von Knotenpunktlinien (28) angeordnet sind, die parallel zu den Längsrändern (20) verlaufen.

5. Einbauelement nach einem der Ansprüche 1 bis 4, **dadurch gekennzeichnet, dass** entlang der Längsränder (20) sowie an denjenigen Knotenpunkten (26), die längs mindestens zweier zwischen den Längsrändern (20) angeordneten und parallel zu diesen verlaufenden Knotenpunktlinien (28) angeordnet sind, korrespondierende Zapfen- und Loch-Verbindungselemente zur mechanischen Verbindung benachbarter Gittermatten (12) ausgebildet sind.

6. Einbauelement nach einem der Ansprüche 1 bis 5, **dadurch gekennzeichnet, dass** die Unterbrechungsabschnitte (38) der ersten Gitterstreben (18) entlang von Streifenbereichen angeordnet sind, die in einem spitzen Winkel zu den Längs- und Querrändern (20, 22) verlaufen.

7. Einbauelement nach einem der Ansprüche 1 bis 6, **dadurch gekennzeichnet, dass** jede erste Gitterstrebe (18) einen einzigen Unterbrechungsabschnitt (38) aufweist.

8. Einbauelement nach einem der Ansprüche 1 bis 6, **dadurch gekennzeichnet, dass** jede erste Gitterstrebe (18) zwei oder drei Unterbrechungsabschnitte (38) aufweist.

9. Einbauelement nach einem der Ansprüche 1 bis 6, **dadurch gekennzeichnet, dass** jede erste Gitterstrebe (18) einen, zwei oder drei Unterbrechungsabschnitte (38) aufweist, wobei benachbarte erste Gitterstreben (18) eine gleiche oder eine ungleiche Anzahl von Unterbrechungsabschnitten (38) aufweisen, und/oder dass erste Gitterstreben (18) mit einem Unterbrechungsabschnitt (38) sowie erste Gitterstreben (18) mit zwei Unterbrechungsabschnitten (38), und/oder erste Gitterstreben (18) mit einem Unterbrechungsabschnitt (38) sowie erste Gitterstreben (18) mit drei Unterbrechungsabschnitten (38), und/oder erste Gitterstreben (18) mit zwei Unterbrechungsabschnitten (38) sowie erste Gitterstreben (18) mit drei Unterbrechungsabschnitten (38), und/oder erste Gitterstreben (18) mit einem Unterbrechungsabschnitt (38), erste Gitterstreben (18) mit zwei Unterbrechungsabschnitten (38) sowie erste Gitterstreben (18) mit drei Unterbrechungsabschnitten (38) existieren.

10. Einbauelement nach einem der Ansprüche 1 bis 9, **dadurch gekennzeichnet, dass** die Unterbrechungsabschnitte (38) der ersten Gitterstreben (18) außerhalb von solchen Längserstreckungsbereichen dieser ersten Gitterstreben (18) angeordnet sind, die sich zwischen einem Längsrand (20) oder einem Querrand (22) und dem dazu längs der ersten Gitterstrebe (18) jeweils nächstbenachbarten Knotenpunkt (26) befinden.

## Claims

1. Installation element for a device for the treatment of a fluid, in particular a gas, in particular for the humidification, purification and/or cooling by means of a working fluid, comprising
- at least a corrugated grid mat (12) provided with
- linearly extending valleys (16) and ridges (14) alternately arranged one beside the other, having flanks (19) connecting the same,
- two longitudinal edges (20) substantially parallel to each other, as well as transversal edges (22) extending transversely thereto,
- linear first grid bars (18), substantially parallel to each other, which extend at angles different from 90° with respect to both the longitudinal edges (20) and the transversal edges (22), and which extend at the bottom along the depressions (16) and at the top along the protrusions (14),
- wave-like second grid bars (24) extending substantially parallel to the longitudinal edges (20) and connected with the first grid bars (18) at junctions (26) arranged along imaginary, substantially linear junction lines (28), und
- wave-like third grid bars (30), substantially parallel with respect to each other, and wave-like fourth grid-bars (32), also substantially parallel with respect to each other, said grid bars being connected with the first and second grid bars (18, 24) at the junctions (26), the third and fourth grid bars (30, 32) being additionally connected with each other at junctions (34) arranged at the flanks (19) lying between the depressions (16) and the protrusions (14),
**characterized in**
- **that** each first grid bar (18) has at least one interruption zone (38) along its extension between the longitudinal edges (20) or between a longitudinal edge (20) and a transversal edge (22), and
- **that** the interruption zones (38) of adjacent first grid bars (18) are arranged laterally offset and in particular without overlap.

2. Installation element of claim 1, **characterized in that** an interruption zone (38) of a first grid bar (18) extends between two junctions (26) adjacent along said grid bar.

3. Installation element of claim 1 or 2, **characterized in that** the interruption zones (38) of adjacent first grid bars (18) are laterally offset by the distance between at least two successive junctions (26) adjacent along a first grid bar (18).

4. Installation element of one of claims 1 to 3, **characterized in that** the junctions (26) are arranged along junction lines (28) that extend parallel to the longitudinal edges (20).

5. Installation element of one of claims 1 to 4, **characterized in that** corresponding pin and hole connecting elements for the mechanical connection of adjacent grid mats (12) are formed along the longitudinal edges (20), as well as at those junctions (26) that are arranged along at least two junction lines (28) situated between the longitudinal edges (20) and extending parallel to the same.

6. Installation element of one of claims 1 to 5, **characterized in that** the interruption zones (38) of the first grid bars (18) are arranged along strip portions that extend under an acute angle to the longitudinal and transversal edges (20, 22).

7. Installation element of one of claims 1 to 6, **characterized in that** each first grid bar (18) has a single interruption zone (38).

8. Installation element of one of claims 1 to 6, **characterized in that** each first grid bar (18) has two or three interruption zone (38).

9. Installation element of one of claims 1 to 6, **characterized in that** each first grid bar (18) has one, two or three interruption zone (38), wherein adjacent first grid bars (18) have an equal or a different number of interruption zones (38), and/or that first grid bars (18) with one interruption zone (38), as well as first grid bars (18) with two interruption zones (38) exist, and/or that first grid bars (18) with one interruption zone (38), as well as first grid bars (18) with three interruption zones (38) exist, and/or that first grid bars (18) with two interruption zones (38), as well as first grid bars (18) with three interruption zones (38) exist, and/or first grid bars (18) with one interruption zone (38), first grid bars (18) with two interruption zones (38), as well as first grid bars (18) with three interruption zones (38) exist.

10. Installation element of one of claims 1 to 9, **characterized in that** the interruption zones (38) of the first grid bars (18) are arranged outside of such portions of the longitudinal extension of these first grid bars (18) that are situated between a longitudinal edge (20) of a transversal edge (22) and the respective junction (26) nearest to the same along the first grid bar (18).

## Revendications

1. Élément à encastrer pour un dispositif destiné au traitement d'un fluide, en particulier d'un gaz, en particulier destiné à l'humidification, au nettoyage et/ou au refroidissement au moyen d'un fluide de travail, avec :
au moins une natte en treillis (12) ondulée, laquelle est pourvue de :
- renfoncements (16) et de bosses (14) qui s'étendent de manière rectiligne et qui sont disposés en alternance les uns à côté des autres, avec des flancs (19) qui relient ces renfoncements (16) et ces bosses (14) ;
- deux bordures longitudinales (20) qui sont, pour l'essentiel, parallèles l'une par rapport à l'autre, ainsi que deux bordures transversales (22) qui courent à la transversale de ces bordures longitudinales (20) ;
- des premières traverses en treillis (18), lesquelles sont rectilignes et, pour l'essentiel, parallèles les unes par rapport aux autres, et lesquelles courent dans des angles qui ne sont pas égaux à 90°, aussi bien par rapport aux bordures longitudinales (20) que par rapport aux bordures transversales (22), et lesquelles premières traverses en treillis (18) s'étendent, en bas, le long des renfoncements (16) et, en haut, le long des bosses (14) ;
- des deuxièmes traverses en treillis (24) en forme de vagues, lesquelles courent, pour l'essentiel, parallèlement aux bordures longitudinales (20) et lesquelles sont reliées avec les premières traverses en treillis (18), au niveau d'intersections (26) disposées le long de lignes d'intersection (28) qui sont conçues, pour l'essentiel, de manière droite ; et
- des troisièmes traverses en treillis (30) en forme de vagues, lesquelles sont, pour l'essentiel, parallèles entre elles, ainsi que le cas échéant, des quatrièmes traverses en treillis (32) en forme de vagues, lesquelles sont, pour l'essentiel, également parallèles entre elles ;
selon lequel ces troisièmes et, éventuellement, quatrièmes traverses en treillis (30, 32) sont reliées avec les premières traverses en treillis (18) et avec les deuxièmes traverses en treillis (24), au niveau des intersections (26) ;
selon lequel les troisièmes traverses en treillis et les quatrièmes traverses en treillis (30, 32) sont en outre reliées entre elles au niveau de points d'intersection (34), lesquels sont disposés au niveau des flancs (19) qui se trouvent entre les renfoncements (16) et les bosses (14) ;
**caractérisé en ce que**
- chaque première traverse en treillis (18) présente au moins une section d'interruption (38) le long de leur extension entre les bordures longitudinales (20), ou entre une bordure longitudinale (20) et une bordure transversale (22) ; et
- les sections d'interruption (38) des premières traverses en treillis (18) adjacentes sont disposées de manière latéralement décalées, et en particulier sans se chevaucher.

2. Élément à encastrer selon la revendication 1, **caractérisé en ce qu'**une section d'interruption (38) d'une première traverse en treillis (18) s'étend entre deux intersections (26) qui sont contiguës le long de la traverse en treillis.

3. Élément à encastrer selon la revendication 1 ou 2, **caractérisé en ce que** les sections d'interruption (38) des premières traverses en treillis (18) adjacentes sont décalées latéralement de la distance entre au moins deux intersections (26) contiguës qui se suivent le long d'une première traverse en treillis (18).

4. Élément à encastrer selon l'une des revendications 1 à 3, **caractérisé en ce que** les intersections (26) sont disposées le long de lignes d'intersection (28) qui courent parallèlement aux bordures longitudinales (20).

5. Élément à encastrer selon l'une des revendications 1 à 4, **caractérisé en ce que** des éléments de jonction à broche et à trou correspondants, destinés à la jonction mécanique des nattes en treillis (12) contiguës, sont conçus le long des bordures longitudinales (20), ainsi qu'au niveau des intersections (26) mêmes qui sont disposées le long d'au moins deux lignes d'intersection (28), disposées entre les bordures longitudinales (20), et qui courent à la parallèle de celles-ci.

6. Élément à encastrer selon l'une des revendications 1 à 5, **caractérisé en ce que** les sections d'interruption (38) des premières traverses en treillis (18) sont disposées le long de zones en forme de bande qui courent dans un angle aigu par rapport aux bordures longitudinales et transversales (20, 22).

7. Élément à encastrer selon l'une des revendications 1 à 6, **caractérisé en ce que** chaque première traverse en treillis (18) présente une seule et unique section d'interruption (38).

8. Élément à encastrer selon l'une des revendications 1 à 6, **caractérisé en ce que** chaque première traverse en treillis (18) présente deux ou trois sections d'interruption (38).

9. Élément à encastrer selon l'une des revendications 1 à 6, **caractérisé en ce que** chaque première traverse en treillis (18) présente une, deux ou trois sections d'interruption (38) ;
selon lequel des premières traverses en treillis (18) adjacentes présentent un nombre identique ou différent de sections d'interruption (38) ; et/ou
**caractérisé en ce que** des premières traverses en treillis (18) sont réalisées avec une section d'interruption (38) et des premières traverses en treillis (18) sont réalisées avec deux sections d'interruption (38) ; et/ou
**caractérisé en ce que** des premières traverses en treillis (18) sont réalisées avec une section d'interruption (38) et des premières traverses en treillis (18) sont réalisées avec trois sections d'interruption (38) ; et/ou
**caractérisé en ce que** des premières traverses en treillis (18) sont réalisées avec deux sections d'interruption (38) et des premières traverses en treillis (18) sont réalisées avec trois sections d'interruption (38) ; et/ou
**caractérisé en ce que** des premières traverses en treillis (18) sont réalisées avec une section d'interruption (38), des premières traverses en treillis (18) sont réalisées avec deux sections d'interruption (38) et des traverses en treillis (18) sont réalisées avec trois sections d'interruption (38).

10. Élément à encastrer selon l'une des revendications 1 à 9, **caractérisé en ce que** les sections d'interruption (38) des premières traverses en treillis (18) sont disposées à l'extérieur des zones mêmes d'extension longitudinales de ces premières traverses en treillis (18) qui se trouvent entre une bordure longitudinale (20) ou une bordure transversale (22) et l'intersection (26) étant située respectivement la plus proche le long de la première traverse en treillis (18).
